# EUROPÄISCHE PATENTSCHRIFT

(11) **EP 0 924 412 B1**
(45) Veröffentlichungstag und Bekanntmachung des Hinweises auf die Patenterteilung: **14.04.2004**
(21) Anmeldenummer: 97810992.4
(22) Anmeldetag: 17.12.1997
(51) Int. Cl.: F02C 7/224, F02C 3/20

(54) **Verfahren zum Betrieb einer Gasturbogruppe**
Method of operating a gas turbo group
Procédé d'utilisation d'un groupe à turbine à gaz

(43) Veröffentlichungstag der Anmeldung: 23.06.1999
(73) Patentinhaber: ALSTOM Technology Ltd, 5400 Baden (CH)
(72) Erfinder: Frutschi, Hansulrich, 5223 Riniken (CH)

(56) Entgegenhaltungen:
- EP-A- 0 676 532
- WO-A-92/19701
- GB-A- 2 119 447
- US-A- 5 233 823
- US-A- 5 617 716

## Beschreibung

### Technisches Gebiet

Die Erfindung etrifft ein Verfahren zum Betrieb einer Gasturbogruppe gemäss Oberbegriff des Anspruchs 1.

### Stand der Technik

Vormischbrenner der neueren Generation, beispielsweise für den Betrieb einer Brennkammer einer Gasturbine, sind in der Lage, eine effiziente und schadstoffarme Verbrennung beim Einsatz eines gasförmigen Brennstoffes zu gewährleisten. Beim Einsatz eines flüssigen Brennstoffes ergeben sich Unzulänglichkeiten, die im Zusammenhang mit der sehr hohen Verdampfungstemperatur solcher Brennstoffe stehen. Je nach Anteil schwersiedender Fraktionen in diesen Brennstoffen bildet sich bei deren Verdampfung Rückstände, welche im Grenzfall zu Koks führen können. Kommt hinzu, dass das für die Beaufschlagung von Gasturbinenbrenner erforderliche sehr hohe Druckniveau die Verdampfungstemperatur noch weiter steigert. Auch eine Verdampfung von Brennölen unter Partialdruckbedingungen ändert nichts nachhaltig an dieser Sachlage, so dass davon auszugehen ist, dass der Betrieb eines Vormischbrenners mit überhitztem Oeldampf nicht in Betracht gezogen werden kann.

Die Schrift US-A-5,233,823 offenbart ein Verfahren zum Betreiben einer Gasturbine, wobei die Vermischung von flüssigem oder gasförmigem Brennstoff mit Wasser oder Dampf vor der Einbringung in die Brennkammer offenbart wird.

Die Veröffentlichung WO 92/19701 offenbart ein Verfahren zur Herstellung einer Brennöl-Emulsion, welche anschliessend in einer Gasturbine verteuert wird.

Die Schrift US-A-5,617,716 offenbart ein Verfahren zum Betreiben einer Gasturbine, wobei der Brennstoff vorgeheizt wird und vor der Einleitung in die Brennkammer mit Dampf vermischt wird.

GB-A-2 119 447 offenbart ein Verdampfungssystem, welches in Gasturbinen eingesetzt werden kann.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art Vorkehrungen vorzuschlagen, um bei dem Betrieb eines Vormischbrenners mit einer verbrennungsluftverdrallten Vormischstrecke die Hammenbildung in Innern des Brenners zu unterdrücken.

Erfindungsgemäss wird dabei ein flüssiger Brennstoff, vorzugsweise On, auf maximal 150-200°C vorgewärmt und in einen Strom heissen Druckwassers möglichst nahe der Sättigungstemperatur geleitet. Diese Emulsion wird dann für den Betrieb eines Vormischbrenners, wie aus EP-0 321 809 B1 oder EP-0 780 629 A2 bekanntgeworden ist, eingesetzt.

Die wesentlichen Vorteile der Erfindung sind darin zu sehen, dass die Zerstäubung der sehr heissen Brennstoff/Wasser-Emulsion die Erzeugung eines feinstmöglichen Nebels verspricht, welcher sich mit der heissen Verbrennungsluft gut vermisehen lässt. Dies erlaubt erfindungsgemäss, dass die Einspritzebene innerhalb des Vormischbrenners weiter stromab verlegt wird, so dass die der grossen Zündwilligkeit des flüssigen Brennstoffes wegen gefürchtete Flammenbildung stromauf im Innern des

Brenners unterdrückt wird, ohne dass eine ungenügende Verbrennung in Kauf genommen werden muss.

Vorteilhafte und zweckmässige Weiterbildungen der erfindungsgemässen Aufgabenlösung sind in den weiteren Ansprüchen gekennzeichnet.

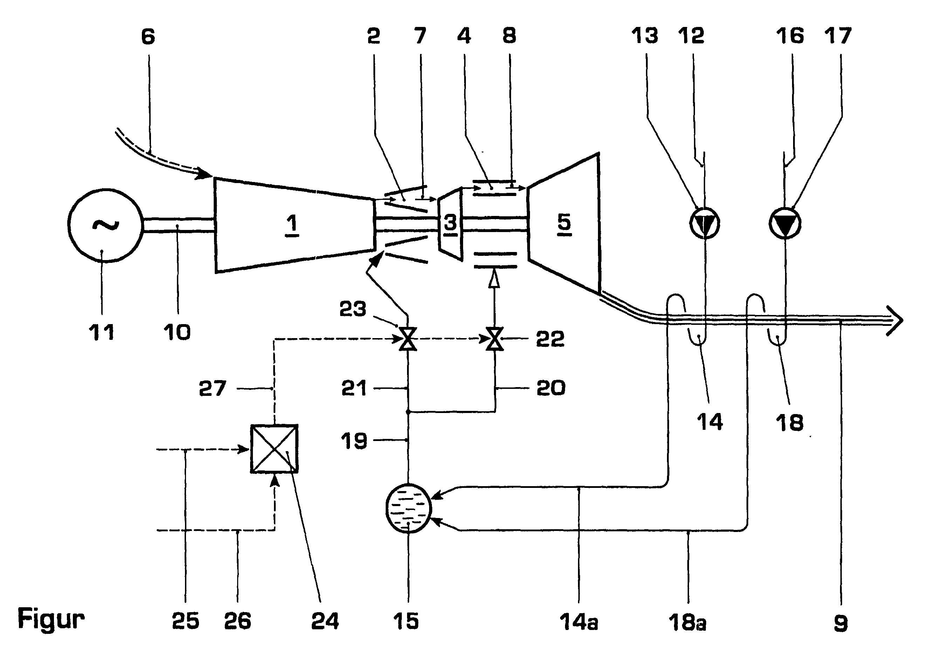

### Kurze Beschreibung der Zeichnung

Im folgenden wird anhand der Zeichnung ein Ausführungsbeispiel der Erfindung näher erläutert.

Die einzige Figur zeigt eine Gasturbogruppe mit Bereitstellung eines flüssigen Brennstoffes zum Betrieb eines Vormischbrenners. Alle für das unmittelbare Verständnis der Erfindung unwesentlichen Merkmale sind fortgelassen worden. Die Strömungsrichtung der Medien ist mit Pfeilen angegeben.

### Wege zur Ausführung der Erfindung, gewerblichen Verwendbarkeit

Die einzige Figur zeigt eine Gasturbogruppe, welche im Zusammenhang mit einer Schaltung zur Aufbereitung eines flüssigen Brennstoffes zum Betrieb eines Vormischbrenners, vorzugsweise gemäss EP-0 321 809 B1 oder EP-0 780 629 A2, steht. Diese Gasturbogruppe weist eine Verdichtereinheit 1 auf, in welcher die Kompression der angesaugten Luft 6 stattfindet. Die so verdichtete Luft strömt sodann in eine erste Brennkammer, Hochdruck-Brennkammer, HD-Brennkammer 2, in welcher die Bereitstellung der ersten Heissgaserzeugung anhand eines Brennstoffes stattfindet. Stromab dieser HD-Brennkammer 2 operiert eine erste Turbine, HochdruckTurbine, HD-Turbine 3, in welcher die in der HD-Brennkammer 2 bereitgestellten Heissgase 7 eine Teilentspannung erfahren. Diese Teilentspannung ist dadurch charakterisiert, dass die teilentspannten Heissgase aus der HD-Turbine 3 noch eine relativ hohe Temperatur, in der Grössenordnung von 1000° C und mehr aufweisen. Dementsprechend besteht die genannte HD-Turbine 3 aus wenigen Laufschaufelstufen, vorzugsweise 1-3 Stufen. Stromab dieser HD-Turbine 3 wirkt eine zweite Brennkammer, Niederdruck-Brennkammer, ND-Brennkammer 4, welche nach einem Selbstzündungsprinzip funktioniert. Diese ND-Brennkammer 4 hat im wesentlichen die Form eines durchströmten Ringkanals, in welchen ein für die Auslösung einer Selbstzündung tauglicher Brennstoff eingedüst wird. Bei einer Temperatur der teilentspannten Heissgase aus der HD-Turbine 3 auf genanntem Temperatumiveau findet in der ND-Brennkammer 4 eine Selbstzündung des eingedüsten Brennstoffes statt. Diese ND-Brennkammer 4 weist nicht dargestellte Strömungshilfen auf, welche im Bereich der Flammenfront eine stabilisierende Rückströmung zur Gewährleistung eines sicheren Brennbetriebes bewerkstelligen. Die teilentspannten Heissgase werden demnach in der ND-Brennkammer 4 wieder zu vollwertigen Heissgasen 8 aufbereitet, deren Temperatur in etwa derjenigen der HD-Brennkammer 2 entspricht. Grundsätzlich sind die Temperaturen der Heissgase 7, 8 nicht unmittelbar begrenzt; diese Grenze wird vielmehr und vordergründig durch die zu beaufschlagende Turbine und deren Maschinenelemente vorgegeben. Die Heissgase 8 beaufschlagen sodann eine zweite Turbine, Niederdruck-Turbine, ND-Turbine 5, in welcher zunächst die endgültige Entspannung stattfindet. Das kalorische Remanenz-Potential der Abgase 9 wird sodann für weitere Zwecke eingesetzt. Ein Generator 11 sorgt für die Stromerzeugung aus der Arbeitsleistung der beiden Turbinen 3, 5. Ein wesentliches Merkmal der gezeigten Gasturbogruppe ist die einheitliche Lagerung aller Strömungsmaschinen 1, 3, 5 auf einer durchgehenden Welle 10, welche vorzugsweise auf zwei nicht gezeigten Lagern abgestützt ist. Die beiden Brennkammern 2, 4 nehmen den intermediären Raum zwischen den beiden Turbinen 3, 5 ein, wobei die HD-Brennkammer 2 vorzugsweise als Ringbrennkammer ausgebildet ist, und weitgehend der Verdichtereinheit 1 übergelagert werden kann, dergestalt, dass diese Massnahme wesentlich dazu beiträgt, die Gasturbogruppe zu einer kompakten Einheit werden zu lassen. Diese Möglichkeit lässt sich aus strömungstechnischen Ueberlegungen bezüglich der ND-Brennkammer 4 nicht ganz realisieren; immerhin ist hier zu sagen, dass die letztgenannte Brennkammer sehr kurz ausfällt, so dass das angestrebte Ziel, eine kompakte Gasturbogruppe zu realisieren, durchaus erreicht wird. Im Zusammenhang mit der weiteren Ausgestaltung dieser Gasturbogruppe wird auf EP-0 620 362 A1 hingewiesen.

Die Abgase 9 durchströmen ein Wärmetauschsystem 14, 18, das von zwei verschiedenen Medien 12, 16 durchströmt wird, welche eine kalorische Aufbereitung erfahren. Ein Strom aus kaltem flüssigem Brennstoff 12, vorzugsweise Öl, wird durch eine Förderpumpe 13 in die Wärmetauschstufe 14 geleitet, und erfährt dort eine kalorische Aufbereitung, in dem Sinn, dass hier ein heisse Ölmenge 14a bereitgestellt wird. Parallel hierzu wird ein aufbereitetes Wasser 16 ebenfalls durch eine Förderpumpe 17 in die Wärmetauschstufe 18 geleitet, und dort kalorisch zu Heisswasser 18a erhöht. Die beiden kalorisch aufbereiteten Medien 14a, 18a strömen in eine Trommel 15, in welcher eine Emulsion 19 entsteht. Diese Emulsion 19 teilt sich dann in zwei Ströme 20, 21 auf. Über jeweils ein zugehöriges Regelorgan 22, 23 werden die heissen Emulsionsströme 20, 21 zu den beiden Brennkammern 2, 4 geleitet. Die dort stattfindende Zerstäubung dieser heissen Emulsionen 20, 21 in den Brennern resp. Eindüsungsmitteln (Vgl. EP-0 620 362 A1) verspricht die Erzeugung eines feinstmöglichen Nebels, welcher sich mit der heissen Verbrennungsluft gut vermischen lässt. Dies erlaubt erfindungsgemäss die Einspritzebene innerhalb eines Vormischbrenners gemäss EP-0 321 809 B1 oder EP-0 780 629 A2 weiter stromab zu verlegen, so dass die mit grossem Zündwilligkeit des flüssigen Brennstoffes wegen gefürchtete Flammenbildung stromauf im Innern des Brenners unterdrückt wird, ohne dass eine ungenügende Verbrennung in Kauf genommen werden muss. Ein Regelsystem 24, das mit verschiedenen Parametern, wie Druck 25, Temperatur 26, etc., gespiesen wird, dosiert über ein Signal 27 die Brennstoffzufuhr zu den beiden Brennkammern 2, 4 gemäss vorgegebenen Sollwerten.

Die hier beschriebene Funktion der Wärmetauscher 14, 18 kann auch in Wirkverbindung mit der Verdichterstufe 1 geschehen, und zwar indem diese Wärmetauscher 14, 18 stromauf oder stromab seines Austrittes angeordnet sind.

### Bezugszeichenliste

- 1: Verdichtereinheit
- 2: HD-Brennkammer
- 3: HD-Turbine
- 4: ND-Brennkammer
- 5: ND-Turbine
- 6: Ansaugluft
- 7: Heissgase
- 8: Heissgase
- 9: Abgase
- 10: Welle
- 11: Generator
- 12: Flüssiger Brennstoff
- 13: Förderpumpe
- 14: Wärmetauschstufe
- 14a: Heisser flüssiger Brennstoff
- 15: Trommel
- 16: Wasser
- 17: Förderpumpe
- 18: Wärmetauschstufe
- 18a: Heisswasser
- 19: Emulsion
- 20,21: Emulsionsströme
- 22, 23: Regelorgane
- 24: Regelsystem
- 25, 26: Parameter
- 27: Signal zur Regelung der Brennstoffzuführung
- 28: Wärmetauschstufe
- 28a: Heisses Öl
- 29: Wärmetauschstufe
- 29a: Überhitzter Dampf
- 30: Mischer
- 31: Nebelgemisch
- 32,33: Leitungen
- 34,35: Regelorgane

## Patentansprüche

1. Verfahren zum Betrieb einer Gasturbogruppe, im wesentlichen bestehend aus einer Verdichtereinheit (1), mindestens einer Brennkammer (2, 4), mindestens einer Turbine (3, 5) und einem Generator (11), wobei; ein Gasstrom (9) aus der Gasturbogruppe eine Wärmetauschstufe (14, 18) beaufschlägt, wobei durch diese Wärmetauschstufe (14, 18) ein flüssiger Brennstoff (12) und eine Wassermenge (16) strömen und diese dort einer kalorischen Aufbereitung unterzogen werden, **dadurch gekennzeichnet, dass** mindestens eine Brennkammer (2, 4) anhand eines Vormischbrenners mit einer verbrennungsluftverdrallten Vormischstrecke betrieben wird und dass mit dem heissen flüssigen Brennstoff (14a) und dem heissen Wasser (18a) eine Emulsion (19) gebildet wird, welche im Vormischbrenner in einen Nebel zerstäubt und in die Verbrennungstuft der Vormischstrecke eingedüst wird.

2. Verfahren nach den Anspruch 1,
**dadurch gekennzeichnet, dass**
die Gasturbogruppe nach einer sequentiellen Befeuerung (2, 4; 3, 5) betrieben wird.

3. Verfahren nach den Anspruch 1,
**dadurch gekennzeichnet, dass**
die Wärmetauschstufen (14, 18; 28, 29) mit Abgasen (9) der Turbine ( 5) beaufschlagt werden.

4. Verfahren nach den Anspruch 1,
**dadurch gekennzeichnet, dass**
die Wärmetauschstufen (14, 18; 28, 29) mit einem Luftstrom aus der Verdichterstufe (1) beaufschlagt werden.

## Claims

1. Method of operating a gas-turbine group, essentially comprising a compressor unit (1), at least one combustion chamber (2, 4), at least one turbine (3, 5) and a generator (11), a gas flow (9) from the gas-turbine group being admitted to a heat-exchange stage (14, 18), a liquid fuel (12) and a water quantity (16) flowing through this heat-exchange stage (14, 18) and being subjected to thermal processing there, **characterized in that** at least one combustion chamber (2, 4) is operated with the aid of a premix burner composed of a combustion-air-swirled premix section and **in that** an emulsion (19) is formed with the hot liquid fuel (14a) and the hot water (18a), which emulsion (19) is atomized in the premix burner to form a mist and is sprayed into the combustion air of the premix section.

2. Method according to Claim 1, **characterized in that** the gas-turbine group is operated according to sequential firing (2, 4; 3, 5).

3. Method according to Claim 1, **characterized in that** exhaust gases (9) of the turbine (5) are admitted to the heat-exchange stages (14, 18; 28, 29).

4. Method according to Claim 1, **characterized in that** an air flow from the compressor stage (1) is admitted to the heat-exchange stages (14, 18; 28, 29).

## Revendications

1. Procédé pour l'utilisation d'un groupe à turbine à gaz, se composant essentiellement d'une unité de compresseur (1), d'au moins une chambre de combustion (2, 4), d'au moins une turbine (3, 5) et d'un générateur (11), dans lequel
un courant gazeux (9) provenant du groupe à turbine à gaz alimente un étage d'échange de chaleur (14, 18), un combustible liquide (12) et une quantité d'eau (16) s'écoulant à travers cet étage d'échange de chaleur (14, 18) et ceux-ci y étant soumis à un traitement calorifique,
**caractérisé en ce qu'**au moins une chambre de combustion (2, 4) fonctionne à l'aide d'un brûleur à prémélange avec une section de prémélange soumise à une rotation d'air de combustion, et **en ce qu'**une émulsion (19) est formée avec le combustible liquide chaud (14a) et l'eau chaude (18a), laquelle est pulvérisée sous forme de brouillard dans le brûleur à prémélange et est injectée dans l'air de combustion de la section de prémélange.

2. Procédé selon la revendication 1,
**caractérisé en ce que**
le groupe à turbine à gaz fonctionne conformément à un chauffage séquentiel (2, 4 ; 3, 5).

3. Procédé selon la revendication 1,
**caractérisé en ce que**
les étages d'échange de chaleur (14, 18 ; 28, 29) sont alimentés avec des gaz d'échappement (9) de la turbine (5).

4. Procédé selon la revendication 1,
**caractérisé en ce que**
les étages d'échange de chaleur (14, 18 ; 28, 29) sont alimentés avec un courant d'air provenant de l'étage du compresseur (1).
